Europäisches Patentamt

European Patent Office

Office européen des brevets

(11) Publication number: **0 488 122 A1**

# EUROPEAN PATENT APPLICATION

(21) Application number: **91120079.8**

(22) Date of filing: **27.12.88**

(51) Int. Cl.⁵: **B65B 7/28**

This application was filed on 25 - 11 - 1991 as a divisional application to the application mentioned under INID code 60.

(30) Priority: **29.12.87 JP 334108/87**
**25.03.88 JP 39326/88 U**
**28.03.88 JP 73658/88**

(43) Date of publication of application:
**03.06.92 Bulletin 92/23**

(60) Publication number of the earlier application in accordance with Art.76 EPC: **0 322 844**

(84) Designated Contracting States:
**CH DE FR GB IT LI NL**

(71) Applicant: **MITSUBISHI JUKOGYO KABUSHIKI KAISHA**
**5-1, Marunouchi 2-chome Chiyoda-ku**
**Tokyo(JP)**

(72) Inventor: **Mihara, Hirokata**
**1-9-10, Igusa**
**Suginami-ku, Tokyo(JP)**
Inventor: **Takagi, Koichi, c/o Nagoya Mac**
**Works of Mitsubishi**
**Jukogyo K.K., 1, Aza Takamichi,**
**Iwatsuka-cho**
**Nakamura-ku, Nagoya-shi, Aichi-ken(JP)**
Inventor: **Shimizu, Teruo, c/o Nagoya Mac**
**Works of Mitsubishi**
**Jukogyo K.K., 1, Aza Takamichi,**
**Iwatsuka-cho**
**Nakamura-ku, Nagoya-shi, Aichi-ken(JP)**
Inventor: **Tashiro, Katsunori, c/o Can**
**Development Center of**
**Mitsubishi Metal Corporation, 1500,**
**Suganuma**
**Oyama-cho, Sunto-gun, Shizuoka-ken(JP)**
Inventor: **Takahashi, Hideo, c/o Can**
**Development Center of**
**Mitsubishi Metal Corporation, 1500,**
**Suganuma**
**Oyama-cho, Sunto-gun, Shizuoka-ken(JP)**

(74) Representative: **Henkel, Feiler, Hänzel &**
**Partner**
**Möhlstrasse 37**
**W-8000 München 80(DE)**

(54) **Can lid feeder.**

(57) The known can lid feeder in a can seamer having a separator for can lids which projects from the outside towards a drop hole provided in a cylindrical body at the bottom of a hopper in the can lid feeder in the can seamer and which separates dropped and stacked can lids one by one from the bottom of the stack, is improved in that the separator for can lids is of rotary type and provided with two independent screw grooves along its circumferential surface for separating can lids one by one from the bottom of a stack of can lids dropped through a drop hole at the bottom of a hopper in a can lid feeder and stacked.

## BACKGROUND OF THE INVENTION:

### Field of the Invention:

The present invention relates to a can lid separator in a can lid feeder that is applicable to a can seamer for packaging cans making use of aluminium cans, iron cans or the like and packed with beer, coffee, juice, etc.

### Description of the Prior Art:

A separator/feeder for can lids has been heretofore proposed, for instance, in Laid-Open Japanese Patent Specification No. 56-139242 (1981). Explaining now this Separator/feeder with reference to Fig. 11, a separator 1 is rotationally driven by a rotary shaft 8 that is in turn driven via a gear train 6 from a drive shaft 5 of a can drum turlet 4. Can lids 7 would drop through a drop hole at the bottom of a hopper and are stacked in an inclined state with one edge of the stack placed on the top of a screw groove 9 of the separator 1, and as the separator 1 rotates, one can lid at the bottom of the stack is lowered as guided by the screw groove 9 of the separator 1 to be fed to the next step of a process.

In addition, various kinds of can lid feeders for use in a can seamer have been heretofore proposed, and explaining one example of the proposed can lid feeders with reference to Fig. 13, cans 102 filled with liquid in a filler 101 are fed into a seaming turlet 104 as conveyed by a can feed conveyor 103. Reference numeral 105 designates a can lid feeding turlet disposed contiguously to the seaming turlet 104, on the outer circumference thereof are formed guide grooves 105a similar to the guide grooves 104a for the cans 102 provided on the outer circumference of the seaming turlet 104, can lids 107 are made to fall onto the guide grooves 105a from a can lid feeding mechanism 106 at the above, and the lid 107 which has been made to fall, is fed onto the can 102 which has been conveyed by the can feed conveyor 103 and is about to be fed to the seaming turlet 104. Thereafter, the can 102 and the lid 107 sent into the seaming turlet 104 is subjected to seaming work by means of seaming rolls disposed around the seaming turlet 104 but not shown, and the thus completed packaging can 102' is sent through an outlet turlet 108 to the next step of a process.

The separator 1 in the above-described heretofore known can lid separator/feeder was provided with only one screw groove 9 as shown in Fig. 12. Accordingly, in the event that cans were conveyed at a high speed by a can feed conveyor traveling at a high speed, in accordance with the can feeding speed, it was necessary to perform feed of the can lids also at a high speed. As the separator 1 could separate and feed only one can lid during its one revolution, it was necessary to perform rotation of the separator 1 also at a high rotational speed in accordance with the traveling along the conveyor of the cans filled with liquid. During this process, since the can lid was moved downwards with its one end engaged with the screw groove 9 as shown in Fig. 11, in the event that the separator 1 was rotated at a high speed, the extent of abrasion of the can lid was large and the side of the separator was also furiously abraded.

## SUMMARY OF THE INVENTION:

It is therefore one object of the present invention to provide an improved can lid separator in a can lid feeder, which is free from the above-mentioned shortcoming of the can lid separator in the prior art having only one screw groove that the edges of the can lids as well as the screw groove of the can lid separator were furiously abraded due to a high rotational speed of the separator.

According to one feature of the present invention, there is provided a can lid separator in a can lid feeder of the type consisting of a rotary separator provided with a screw groove for separating can lids dropped through a drop hole at the bottom of a hopper in the can lid feeder in a can seamer and stacked, one by one from the bottom of the stack, in which the screw grooves are formed two.

According to the present invention, when a can drum guide star wheel rotates, the can lid separator is rotated simultaneously via a gear train. This separator projects into a drop hole where can lids have dropped and are stacked, from a side surface of its bottom portion, and the circumferential edge of the can lid at the bottom of the stack rides on the top of a first screw groove of the separator. Then, as the separator rotates, the can lids in the bottom portion are sequentially lowered and fed into grooves of rails. When the separator has rotated by a half revolution, the next can lid begins to be lowered by the second screw groove and is fed into the grooves of the rails in succession to the first can lid.

Owing to the above-mentioned construction and operation of the can lid feeder according to the present invention, due to the fact that the screw grooves on the separator are formed two, in the case where the traveling speed of the cans filled with liquid and conveyed along the can feed conveyor is the same as that in the prior art, the rotational speed of the separator could be 1/2 as compared to the separator having one screw groove in the prior art. Accordingly, the problems that the can lids are abraded and scratched as is the case with the prior art apparatus can be mitigated, also the problem relating to abrasion and noise of the separator knife is not present, and advantages are provided in that a life of a separator can be prolonged.

The above-mentioned and other objects, features and advantages of the present invention will become more apparent by reference to the following description of a preferred embodiment of the invention taken in conjunction with the accompanying drawings.

BRIEF DESCRIPTION OF THE DRAWINGS:

In the accompanying drawings:

Fig. 1 is a perspective view of a can lid feeder in which a can lid separator according to a preferred embodiment of the present invention is used;

Fig. 2 is a plan view of a can drum guide wheel in the same apparatus;

Fig. 3 is an enlarged plan view of the same;

Fig. 4 is a cross-section view taken along line A-A in Fig. 2;

Fig. 5 is a cross-section view taken along line B-B in Fig. 4;

Fig. 6 is a cross-section view taken along line C-C in Fig. 4;

Fig. 7 is a perspective view of the can lid separator according to a preferred embodiment of the present invention;

Fig. 8 is a schematic side view showing an engaged condition between the same separator and a can lid; and

Fig. 9 is a perspective view of the can lid separator in the prior art.

DESCRIPTION OF THE PREFERRED EMBODIMENTS:

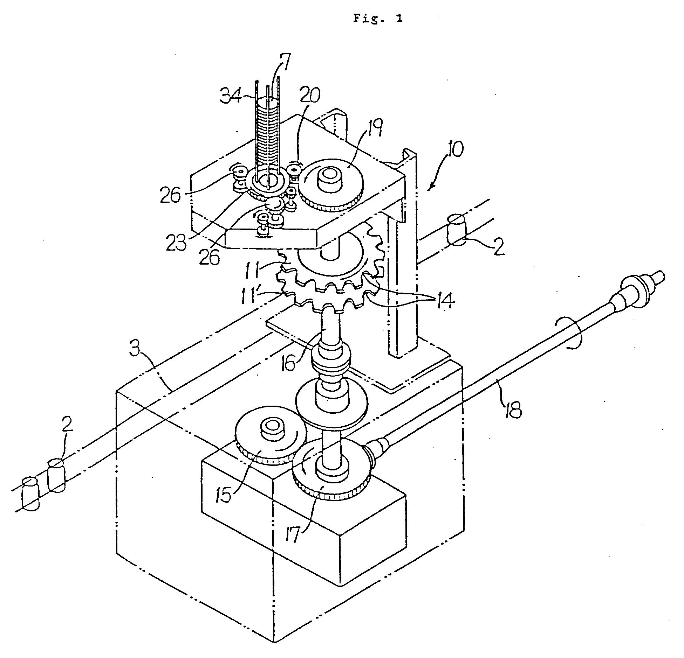

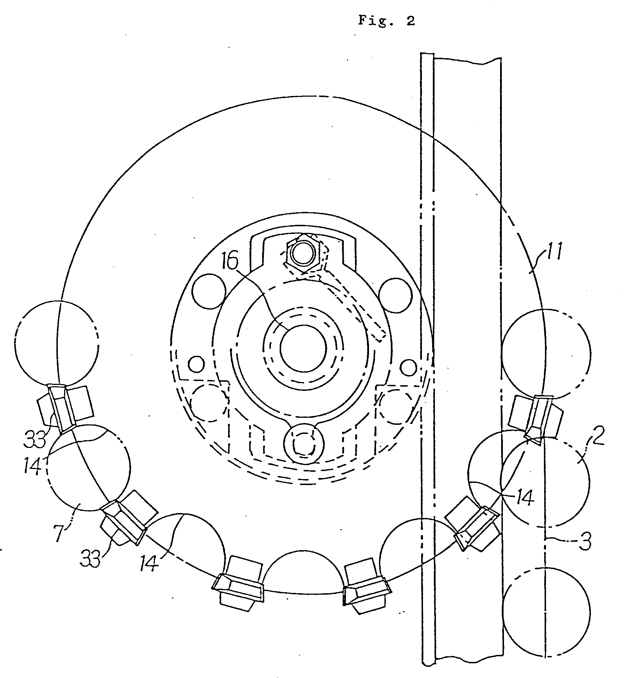

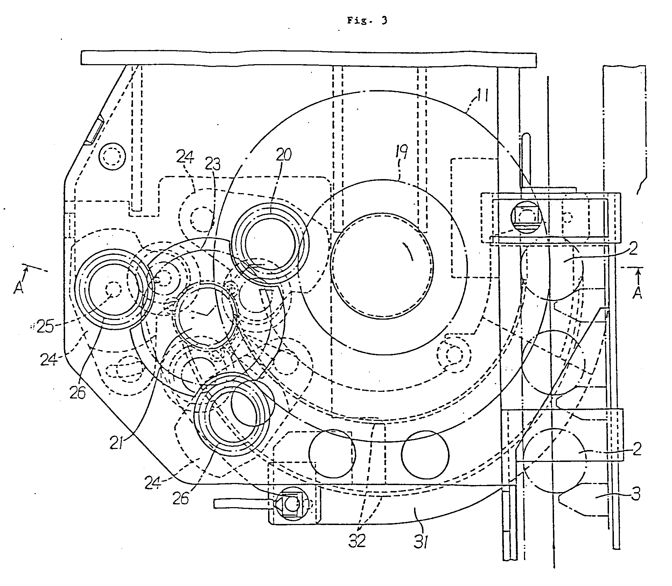

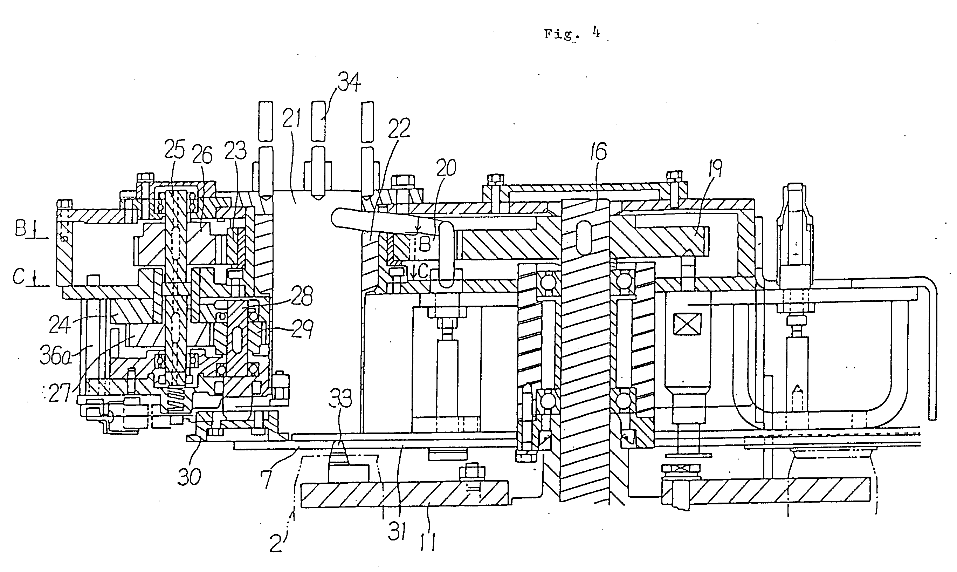

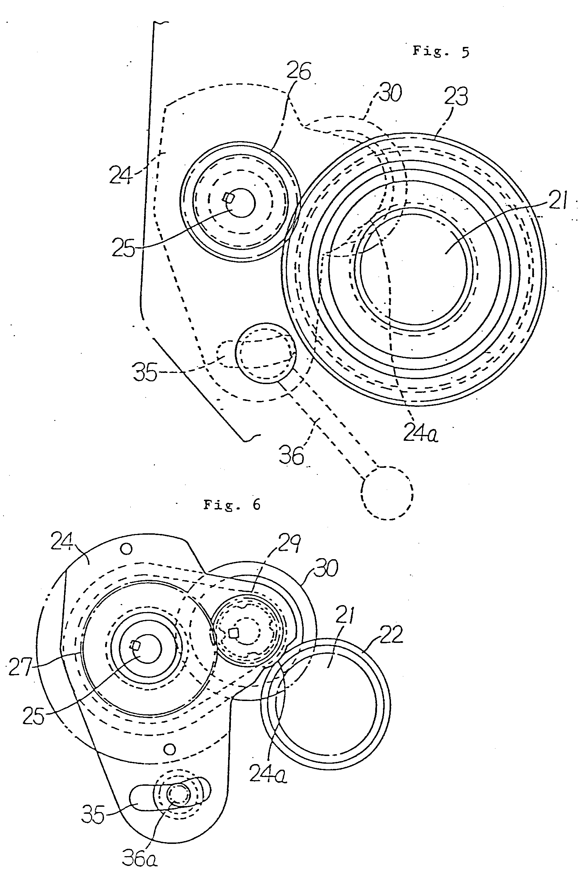

Now the present invention will be explained in connection to the illustrated embodiments. Figs. 1 to 6 show a can lid feeder in which a can lid separator according to a preferred embodiment of the present invention is used. At first, explaining with respect to a can lid feeder 10 with reference to Figs. 1 to 6, Fig. 1 is a perspective view showing only a general mechanism of the can lid feeder 10, in which a can drum guide wheel assembly is composed of a pair of upper and lower guide star wheels 11 and 11', and as shown in Fig. 2 these guide star wheels 11 and 11' have guide grooves 14, with which cans 2 conveyed along a can feed conveyor would be engaged at a contact point between the respective loci of their conveying centers. Reference numeral 15 designates a drive gear, which is meshed with a gear 17 for driving a shaft 16 to which the can drum guide star wheels 11 and 11' are fixedly secured. Reference numeral 18 designates a rotary shaft which rotates in the direction of an arrow, and this is provided for the purpose of synchronising the can lid feeder 10 with rotation of a seamer not shown. Reference numeral 19 designates a gear fixed to the top of the shaft 16, and this gear 19 is adapted to drive a gear 23 surrounding a cylindrical body 22 having a drop hole 21 of can lids 7 therein so as to rotate about its own axis via an intermediate gear 20. The gear 23 is meshed with a gear 26 fixed to a shaft 25 which serves as a center of rotation of a swinging gear box 24, in addition on the same shaft 25 is fixed a gear 27, which is in turn meshed with a gear 29 fixed on a shaft 28 that is rotatably supported from the swinging gear box 24, and at the bottom of the same shaft 28 is fixedly secured a can lid separator 30. The can lid separator 30 serves to separate one can lid 7 at the bottom of a stack of can lids 7 which dropped through the drop hole 21 and stacked, and to feed it to grooves 32, 32 of a rail 31. Reference numeral 33 designates pushers mounted on the can drum guide star wheel 11 between the guide grooves 14 and 14, which hold the can lids 7 fed between the grooves 32, 32 of the rail 31 right above the guide grooves 14 and convey them along the grooves 32, 32 of the same rail in accordance with rotation of the can drum guide star wheel 11. Since the location where the can lid 7 reaches the above of the can 2 conveyed along the can feed conveyor 3 and having been engaged with the can drum guide star wheels 11 and 11' is the terminal ends of the grooves 32, 32, the can lid 7 is disengaged there from the grooves 32, 32 and drops on the can 2 positioned just thereunder, hence the can 2 is sent to the seamer with the can lid 7 kept placed on the can opening portion, and seaming work is effected.

The can lid separator 30 projects from a notched portion at the bottom of the cylindrical body 22 into the drop hole 21 for the can lids, the outer circumferential portion of the can lid at the lowest level is held at the top of a screw groove of the same separator 30, and as the separator 30 is rotated, the can lid is guided to the lower portion of the screw groove. However, in the case where the can lid diameter is changed in accordance with change of the can drum diameter, the separator 30 must be moved in the radial direction in view of the necessity for adapting it to the outer circumferential edge of the can lid. In addition, in the event that the can lid diameter has been changed, it is necessary to replace a cylindrical body 22 having a drop hole diameter matched with the can lid diameter, but provision is made such that regardless of whether the diameter of the replaced cylindrical body has been enlarged or reduced, the outer circumferential edge of the separator 30 can be projected into the drop hole 21 by a predetermined dimension by merely bringing the side surface of the swinging gear box into contact with the outer circumferential surface of the cylindrical body 22. Explaining now the swinging action of the swinging gear box 24, this gear box 24 would swing about the shaft 25. The swinging gear box 24 is provided with an elongated hole 35 that is arcuate about the axis of the shaft 25, and a positioning/clamping screw rod 36a associated with a clamp lever 36 is fitted in the elongated hole 35 to position the swinging gear box 24. If the positioning/clamping screw rod 36a is released by turning the clamp lever 36, the swinging gear box 24 can be manually made to swing arbitrarily as guided by the elongated hole 35 engaged with the screw rod 36a, and thereafter if the screw rod 36a is fastened by turning the clamp lever 36 in the opposite direction, the swinging gear box 24 can be fixed in position there.

Now the operation of the apparatus will be described. Cans 2 filled with liquid by a filler 1 are conveyed towards the can lid feeder 10 by the can feed conveyor 3.

On the other hand, the can drum guide star wheels 11 and 11' and the gear 19 are rotated via the gear 17 and the shaft 16 as driven by the drive gear 15 shown in Fig. 1. When the gear 19 rotates, the gears 20, 23 and 26 are rotated, furthermore the gears 27 and 29 are rotated via the shaft 25, thereby the shaft 28 is rotated, and it rotates the can lid separator 30.

Can lids 7 are fed from a hopper 34, then drop through the drop hole 21 of the cylindrical body 22 and are stacked. Then the can lid 7 at the lowermost level is taken out as a result of rotation of the can lid separator 30 and is fed into the grooves 32, 32 of the rail 31. The can lid 7 entered in the grooves 32, 32 is pushed by the pusher 33 mounted on the can drum guide star wheel 11 under the rail 31, hence it is conveyed as held at the position just above the guide groove 14 of the guide star wheel 11, and at the position where the grooves 32, 32 have terminated, it drops towards the can opening portion from the right above of the can 2 placed at the position where the can 2 has been engaged with the guide groove 14 of the can drum guide wheel 11 after having been conveyed by the can feed conveyor 3 as described above, and is placed on the can opening portion.

Subsequently, if the can drum diameter is changed, then the can lid diameter also must be changed, and so, it is necessary to replace a new cylindrical body 22 having a size matched with the changed can lid diameter. Prior to the replacement of the cylindrical body 22, the screw rod 36a is released by turning the clamp lever 36, and then the swinging gear box 24 is manually made to swing about the axis of the shaft 25 as guided by the elongated hole 35 up to the position where the separator 30 is disengaged from the cylindrical body 22. Next, after the cylindrical body 22 has been replaced by that having a predetermined diameter, the swinging gear box 24 is manually made to swing about the axis of the shaft 25 with the screw rod 36a of the clamp lever 36 guided along the elongated hole 35 up to the position where a side surface 24a of the swinging gear box 24 comes into contact with the outer circumferential surface of the cylindrical body, and thereafter, when the clamp lever 36 is turned in the opposite direction up to the original position, then the positioning/clamping screw rod 36a is fastened. Thus the swinging gear box 24 can be fixed in position there by means of the clamp lever 36.

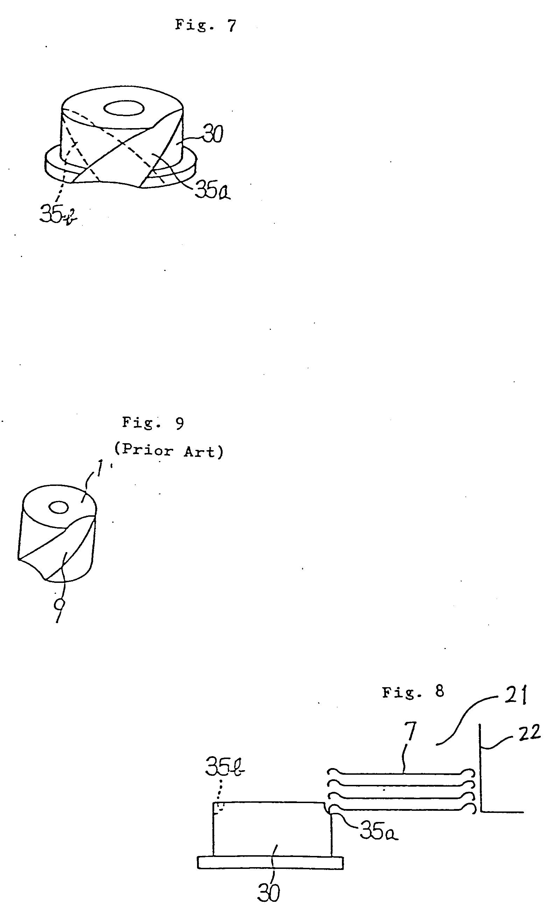

Now the can lid separator according to a preferred embodiment of the present invention will be explained with reference to Figs. 7 and 8. As shown in Fig. 7, in the can lid separator 30 according to this embodiment, first and second screw grooves 35a and 35b are formed at symmetric positions so that the circumferential edge portion of the can lid 7 can be engaged with and held by the top portion of the screw groove 35a or 35b.

Explaining now the operation of this preferred embodiment, among the can lids 7 dropped through the drop hole 21 of the cylindrical body 22 and held stacked, the circumferential edge portion of the can lid at the bottom of the stack is engaged with the top of, for instance, the first screw groove 35a of the separator 30, and as the can lid separator 30 rotates, the same can lid 7 is lowered by the first screw groove 35a. Subsequently, the second screw groove 35b is engaged with the circumferential edge portion the second from the bottom can lid 7, and so, the second can lid is also lowered similarly by the second screw groove 35b. And, in succession to the first can lid, the second from the bottom can lid 7 engaged with the second screw groove 35b is also fed into the grooves 32, 32 of the rail 31. The can lid 7 entered in the grooves 32, 32 is pushed by the pusher 33 mounted on the can drum guide star wheel 11 under the rail 31, hence it is conveyed as held at the position just above the guide groove 14 of the guide star wheel 11, and at the position where the grooves 32, 32 have terminated, it drops towards the can opening portion from the right above of the can 2 placed at the position where the can 2 has been engaged with the guide groove of the can drum guide star wheel 11 after having been conveyed by the can feed conveyor 3 as described above, and is placed on the can opening portion. It is to be noted that the grooves 32, 32 are inclined downwards towards its terminal end portion to reduce the drop distance when the can lid drops on the can drum so that the can lid can drop accurately onto the can opening portion. The cans 2 having the can lid 7 placed on their openings in the above-described manner, are further conveyed by the can feed conveyor 3 to be fed into the seamer.

Since the screw grooves on the separator are formed two, in the case where the traveling speed of the cans filled with liquid and conveyed along the can feed conveyor is the same as that in the prior art, the rotational speed of the separator could be 1/2 as compared to the separator having one screw groove in the prior art. Accordingly, the problems that the can lids are abraded and scratched as is the case with the prior art apparatus can be mitigated, also the problem relating to abrasion and noise of the separator knife is not present, and advantages are provided in that a life of a separator can be prolonged.

Since many changes and modifications in design can be made to the above-described construction without departing from the spirit of the present invention, it is intended that all matter contained in the above description and illustrated in the accompanying drawings shall be interpreted to be illustrative and not as a limitation to the scope of the invention.

## Claims

1. A can lid separator in a can lid feeder of the type consisting of a rotary separator provided with a screw groove for separating can lids dropped through a drop hole at the bottom of a hopper in the can lid feeder in a can seamer and stacked, one by one from the bottom of the stack, characterized in that said screw grooves are formed two.

Fig. 1

Fig. 2

Fig. 3

Fig. 4

Fig. 5

Fig. 6

Fig. 7

Fig. 9
(Prior Art)

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 906 072 (CARLSON) <br> * column 3, line 17 - line 45; figures 1,6,7 * | 1 | B65B7/28 |
| | ----- | | |
| | | | **TECHNICAL FIELDS SEARCHED (Int. Cl.4)** |
| | | | B65B |

The present search report has been drawn up for all claims

| Place of search | Date of completion of the search | Examiner |
|---|---|---|
| THE HAGUE | 24 JANUARY 1992 | CLAEYS H.C.M. |

EPO FORM 1503 03.82 (P0401)